# EUROPEAN PATENT APPLICATION

(11) **EP 4 289 285 A1**
(43) Date of publication of application: **13.12.2023**
(21) Application number: 21924871.3
(22) Date of filing: 24.12.2021
(51) Int. Cl.: A23L 7/109

(54) **METHOD FOR PRODUCING INSTANT NOODLES**

(30) Priority: 05.02.2021 JP 2021017812
(71) Applicant: NISSIN FOODS HOLDINGS CO., LTD., Yodogawa-ku Osaka-shi, Osaka 532-8524 (JP)
(72) Inventor: ISHIDA, Shogo, Osaka-shi Osaka 532-8524 (JP); SANADA, Kohei, Osaka-shi Osaka 532-8524 (JP)
(74) Representative: Mewburn Ellis LLP
(86) International application number: PCT/JP2021/048141
(87) International publication number: WO 2022/168486

(57) **Abstract**

It is an object of the present invention to provide a method for producing instant noodles, in which noodle making properties and texture are improved even though the amount of salt used in kneading water for noodles is reduced. By kneading a main raw material powder with kneading water in which salt and monosodium glutamate are dissolved in such a manner that salt and monosodium glutamate are in respective amounts of 0 to 10 g and 1 to 6 g, based on 1 kg of the main raw material powder to prepare a noodle dough, performing noodle making to prepare noodle strings, steaming the noodle strings if necessary, and drying the noodle strings, a method for producing instant noodles, in which noodle making properties and texture are improved even though the amount of salt used in the kneading water for noodles is reduced, can be provided.

## Description

### TECHNICAL FIELD

The present invention relates to a method for producing reduced-salt instant noodles.

### BACKGROUND ART

In recent years, a large number of so-called reduced-salt products have been marketed in which a sodium content is reduced in order to prevent hypertension. In "Dietary Reference Intakes for Japanese" in the 2010 edition by the Ministry of Health, Labour and Welfare, the daily target amount of salt intake is less than 9 g for an adult male and is less than 7.5 g for an adult female, but in "Dietary Reference Intakes for Japanese" in the 2015 edition, the daily target amount of salt intake is less than 8 g for an adult male and is less than 7 g for an adult female, and in "Dietary Reference Intakes for Japanese" in the 2020 edition, the daily target amount of salt intake is less than 7.5 g for an adult male and is less than 6.5 g for an adult female, and thus, the daily target amounts of salt intake have been reduced, so that it is expected that further increase in consciousness of salt reduction will continue.

Techniques to reduce salt in noodles are disclosed in, for example, Patent Literatures 1 to 6.

In Patent Literature 1, as a technique relating to wheat noodles that have sufficient elasticity even if the amount of salt added is smaller than before, wheat noodles containing wheat flour, a thickener composition, and water, wherein the thickener composition contains xanthan gum, locust bean gum, and guar gum, are described.

In Patent Literature 2, as noodles in which the contents of sodium salts, particularly salt and sodium carbonate, are reduced or are made zero, and a method for producing the noodles, noodles containing either isomaltulose or reduced isomaltulose or both of them, and a method for producing the noodles are described.

In patent Literature 3, as a technique to produce salt-free noodles without adding salt, a method for producing noodles utilizing magnesium chloride contained in bittern is described.

In Patent Literatures 4 to 6, techniques to reduce salt in instant noodles by adding potassium lactate are described.

### CITATION LIST

### PATENT LITERATURE

Patent Literature 1
   Japanese Patent Laid-Open No. 2015-84772
Patent Literature 2
   Japanese Patent No. 4644298
Patent Literature 3
   Japanese Patent No. 4761534
Patent Literature 4
   Japanese Patent No. 6353499
Patent Literature 5
   Japanese Patent No. 6334623
Patent Literature 6
   Japanese Patent Laid-Open No. 2019-140963

### SUMMARY OF INVENTION

### TECHNICAL PROBLEM

It is an object of the present invention to provide a method for producing instant noodles, in which noodle making properties and texture are improved even though the amount of salt used in kneading water for noodles is reduced.

### SOLUTION TO PROBLEM

In studying reduction of salt in instant noodles, the present inventors have earnestly studied a method for reducing salt to be kneaded into noodles, and as a result, they have found a method for producing instant noodles, in which noodle making properties and texture are improved even though the amount of salt used in kneading water for noodles is reduced, and they have accomplished the present invention.

More specifically, the present invention is a method for producing instant noodles, comprising a step of kneading a main raw material powder with kneading water containing 0 to 10 g of salt and 1 to 6 g of monosodium glutamate based on 1 kg of the main raw material powder to prepare a dough, a step of preparing noodle strings from the dough prepared, and a step of drying the noodle strings.

The amount of the monosodium glutamate added according to the present invention is more preferably 1 to 3 g based on 1 kg of the main raw material powder.

### ADVANTAGEOUS EFFECT OF INVENTION

By the present invention, a method for producing instant noodles, in which noodle making properties and texture are improved even though the amount of salt used in the kneading water for noodles is reduced, can be provided.

### BRIEF DESCRIPTION OF DRAWINGS

[FIG. 1] FIG. 1 shows a farinograph analysis result of Test Example 1 (all-purpose flour 200 g + kansui preparation 0.4 g + salt 0 g).
[FIG. 2] FIG. 2 shows a farinograph analysis result of Test Example 2 (all-purpose flour 200 g + kansui preparation 0.4 g + salt 2 g).
[FIG. 3] FIG. 3 shows a farinograph analysis result of Test Example 3 (all-purpose flour 200 g + kansui preparation 0.4 g + salt 4 g).
[FIG. 4] FIG. 4 shows a farinograph analysis result of Test Example 4 (all-purpose flour 200 g + kansui preparation 0.4 g + salt 6 g).
[FIG. 5] FIG. 5 shows a farinograph analysis result of Test Example 5 (all-purpose flour 200 g + salt 0 g).
[FIG. 6] FIG. 6 shows a farinograph analysis result of Test Example 6 (all-purpose flour 200 g + salt 6 g).
[FIG. 7] FIG. 7 shows a farinograph analysis result of Test Example 7 (all-purpose flour 200 g + monosodium glutamate 11.6 g).
[FIG. 8] FIG. 8 shows a farinograph analysis result of Test Example 8 (all-purpose flour 200 g + kansui preparation 0.4 g + salt 2 g + monosodium glutamate 0.6 g).

### DESCRIPTION OF EMBODIMENTS

Hereinafter, the present invention will be described in detail. However, the present invention is in no way limited to the following description.

### 1. Raw material formulation

Examples of the main raw material powders used in the production of instant noodles according to the present invention include cereal flours, such as wheat flour (including durum wheat flour), buckwheat flour, barley flour, and rice flour, and various starches, such as potato starch, tapioca starch, and corn starch, and these may be used singly or may be used by mixing them. As the starch, raw starch, gelatinized starch, modified starch, such as acetylated starch, etherified starch or crosslinked starch, or the like can also be used.

In addition, as sub materials, salt, an alkaline agent, phosphates, various thickeners, a noodle quality modifier, edible fat or oil, a pH adjuster, various pigments, such as carotene pigment, a preservative, etc. that are generally used in the production of instant noodles can be added in the present invention. These may be added together with the main raw material powder, or may be added by dissolving or suspending them in kneading water.

At this time, for the sake of a flavor of noodles and noodle making properties, salt is usually added into kneading water in the production of noodles. The amount of salt added varies depending on the type of noodles desired, but generally, salt is used in an amount of about 1 to 5 wt% based on 1 kg of the main raw material powder. In the case where salt in noodles is reduced, if the amount of salt to be added to the kneading water is reduced, salty taste of noodles or noodle making properties are deteriorated.

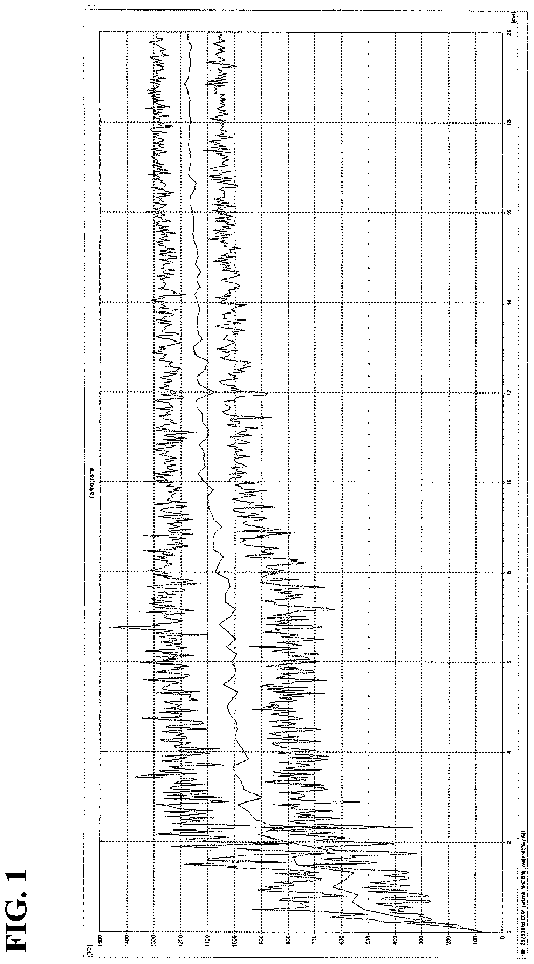

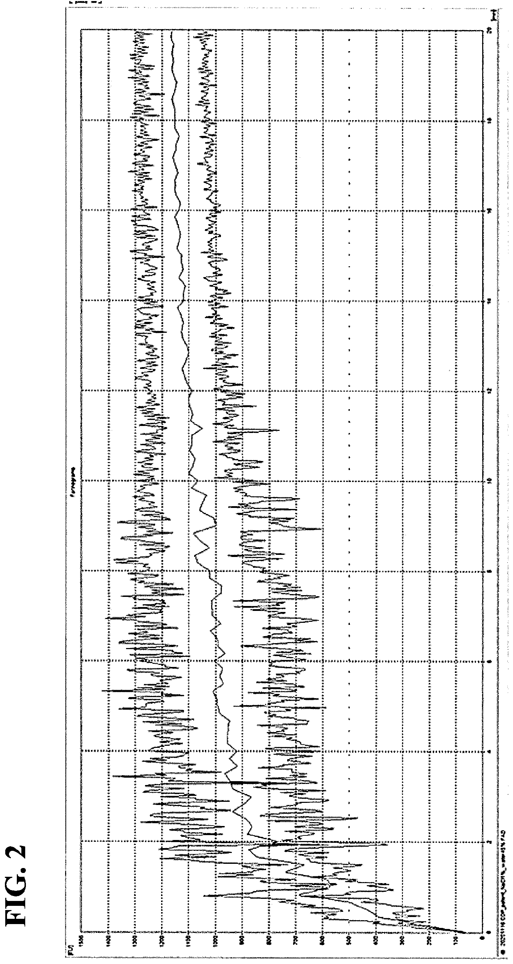

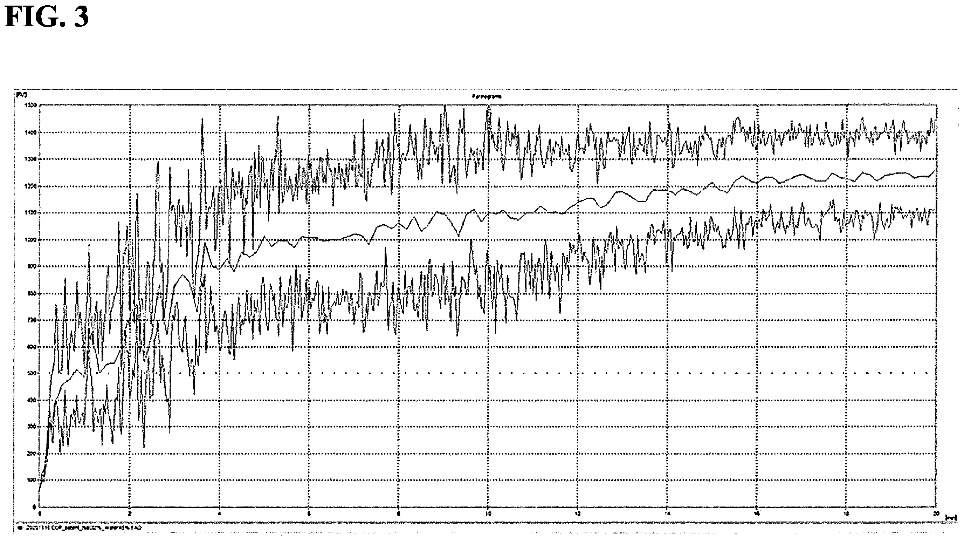

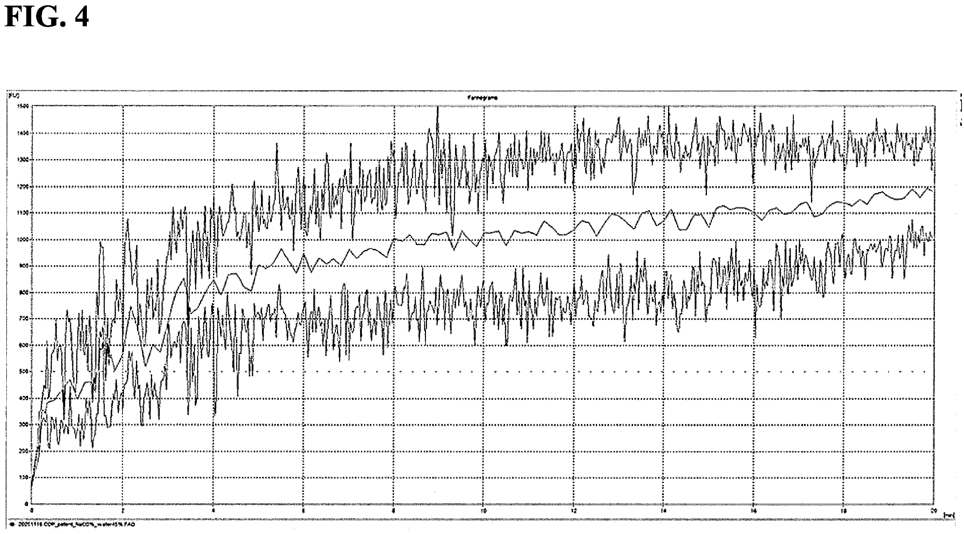

FIGs. 1 to 4 show diagrams (X axis: time (minute(s)), increment of 2 minutes, Y axis: farinograph unit, increment of 100 FU) showing an analysis result obtained by measuring an influence of salt on the properties of all-purpose flour-based dough using a farinograph (manufactured by Brabender GmbH & Co. KG). The measurement was carried out by introducing, into 200 g of all-purpose flour, kneading water in which 0.4 g of a kansui preparation (sodium carbonate 6 : potassium carbonate 4) and 0 to 6 g of salt (0 to 3 wt% based on the weight of wheat flour) were dissolved in 90 ml of water, and kneading them with a farinograph. Although a difference is hard to find because a kansui preparation is added, but as a result of measurement, in a graph of FIG. 1 that is an experimental plot (Test Example 1) in which salt is not added, the bandwidth (width between upper line and lower line) becomes narrower from around 8 minutes; and in the experimental plot (Test Example 2) in which salt is added in an amount of 2 g (10 g based on 1 kg of the main raw material powder), the bandwidth becomes narrower from around 10 minutes, as shown in FIG. 2; in the experimental plot (Test Example 3) in which salt is added in an amount of 4 g (20 g based on 1 kg of the main raw material powder), the bandwidth becomes narrower from around 12 minutes, as shown in FIG. 3; in the experimental plot (Test Example 4) in which salt is added in an amount of 6 g (30 g based on 1 kg of the main raw material powder), the bandwidth becomes narrower from around 18 minutes, as shown in FIG. 4; and thus, as the amount of salt is increased, the time untill the bandwidth becomes narrower becomes longer. This indicates the degree of formation of gluten structure due to the addition of salt, and indicates that as the amount of salt is increased, gluten structure is more firmly formed. Up to the experimental plot (Test Example 3) shown in FIG. 3 in which salt is added in an amount of 20 g based on 1 kg of the main raw material powder, there is no problem with the noodle making properties even if salt is only reduced, though there is a slight influence on the texture. In the experimental plot (Test Example 2) shown in FIG. 2 in which salt is added in an amount of 10 g based on 1 kg of the main raw material powder, not only is a considerable influence exerted on the texture but also an influence is exerted on the noodle making properties. Therefore, when salt is reduced to 10 g or less based on 1 kg of the main raw material powder, it is necessary to improve noodle making properties and texture. Then, in the present invention, conditions for adding 0 to 10 g of salt based on 1 kg of the main raw material powder to the kneading water have been studied.

In the present invention, by adding monosodium glutamate to the kneading water, noodle making properties and texture are improved. Monosodium glutamate is used as an Umami seasoning, and also in instant noodles, it is used as a material of a liquid seasoning for noodles. However, it is rarely used in the form kneaded into kneading water, and under the circumstances where the amount of salt added to the kneading water is large, it is impossible to know the effect of monosodium glutamate to improve noodle making properties and texture. The effect of monosodium glutamate to improve noodle making properties and texture is an effect that is found out for the first time when reduction of salt is carried out.

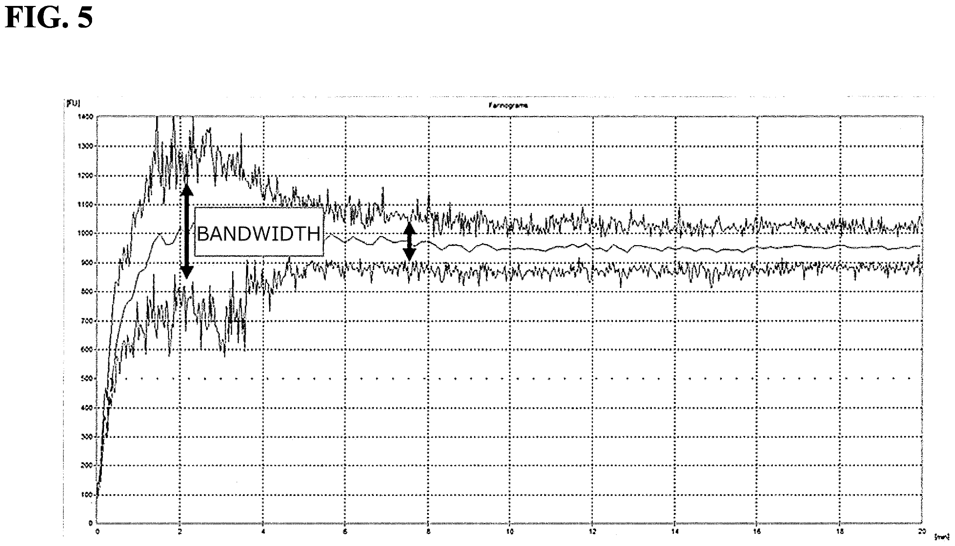

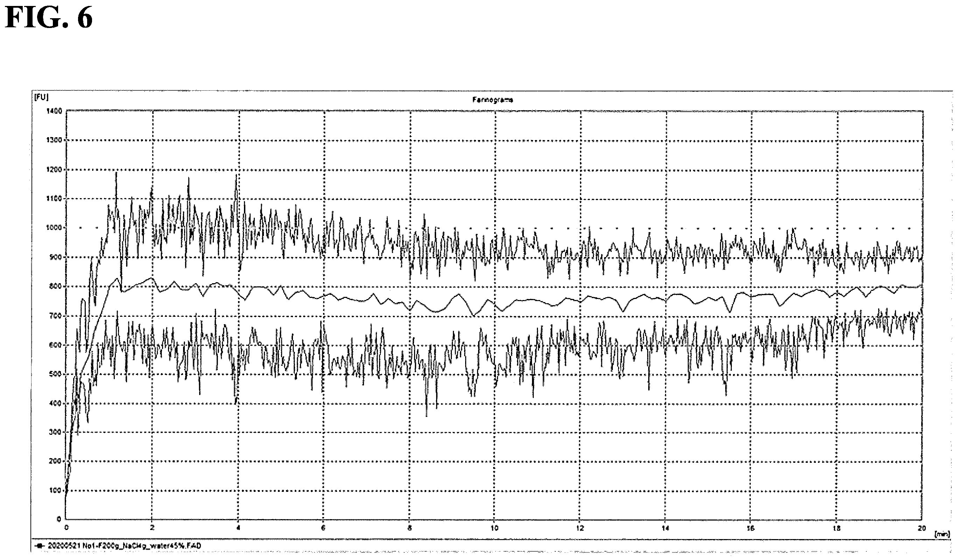

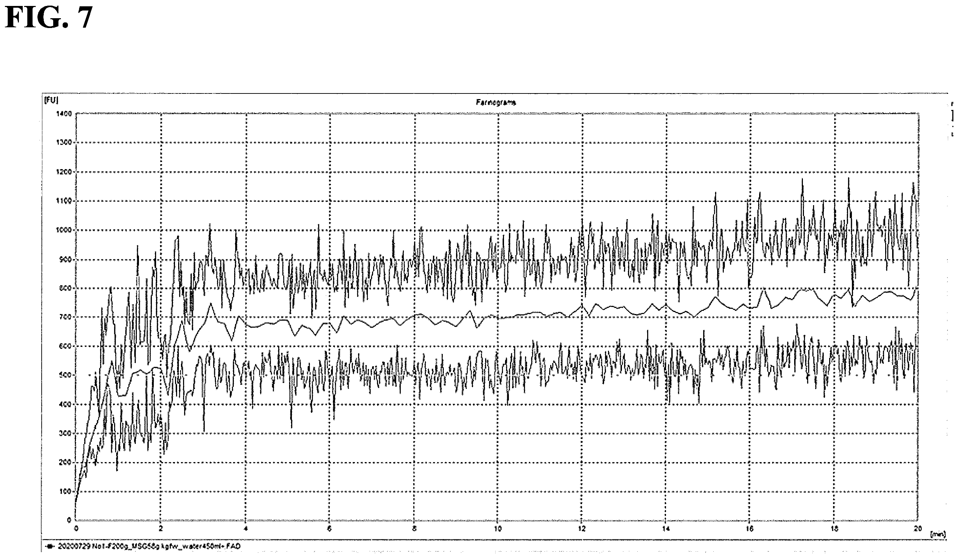

FIG. 5 to FIG. 7 show farinograph measured when salt is not added, or salt or monosodium glutamate is added alone to all-purpose flour, while a kansui preparation is not used. The measurement was carried out by introducing, into 200 g of all-purpose flour, 90 ml of water (Test Example 5), or kneading water in which 6 g of salt (Test Example 6) or 11.6 g of monosodium glutamate (Test Example 7) was dissolved in 90 ml of water, and kneading them with a farinograph. As shown in FIG. 5 and FIG. 6, it can be understood that by adding salt, a decrease of the bandwidth is suppressed, and gluten is firmly formed. As shown in FIG. 7, it has been suggested that monosodium glutamate also exerts an effect of firmly forming gluten without decreasing the bandwidth though the farinograph behavior thereof is slightly different from that of salt.

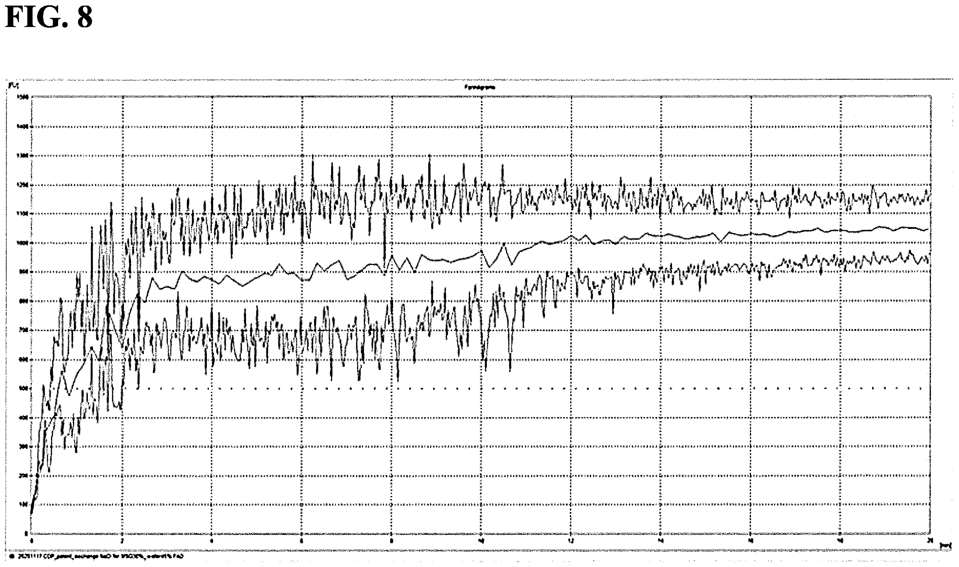

Then, as shown in FIG. 8, in the experimental plot (Test Example 8) in which 0.6 g (3 g based on 1 kg of the main raw material powder) of monosodium glutamate is further added in addition to the case of the experimental plot (Test Example 2) of FIG. 2 in which 2 g (10 g based on 1 kg of the main raw material powder) of salt is added, the time to decrease the bandwidth of the farinograph becomes slightly longer as compared with the experimental plot (Test Example 2) of FIG. 2 in which 10 g of salt is added based on 1 kg of the main raw material powder. From the above result, it has been suggested that by adding monosodium glutamate, noodle making properties and texture given when salt is reduced can be improved though the farinograph results in a slight change, and as a result of validation for which real instant noodles were used, more significant improvement in texture than the change of the farinograph has been observed.

The amount of the monosodium glutamate added is preferably 1 to 6 wt% based on 1 kg of the main raw material powder. If the amount of the monosodium glutamate added is less than 1 wt% based on 1 kg of the main raw material powder, it is difficult to obtain sufficient texture improving effect and noodle making improving effect. On the other hand, if the amount of the monosodium glutamate added is more than 6 wt% based on 1 kg of the main raw material powder, not only does the texture become hard and too tight but also some influence is exerted on the taste. Particularly preferably, monosodium glutamate is added in an amount of 1 to 3 wt% based on 1 kg of the main raw material powder.

### 2. Kneading step

The method for preparing the dough according the present invention is carried out in accordance with an ordinary method. More specifically, using a batch mixer, a flow jet mixer, a vacuum mixer or the like, kneading is carried out in such a manner that the main raw material powder and the kneading water are homogeneously mixed, and a crumbly dough is prepared.

### 3. Noodle making step

Subsequently, noodle strings are prepared from the dough prepared. The preparation method is carried out in accordance with an ordinary method, and a method comprising forming the dough into a crude noodle belt with rolls, thereafter subjecting the crude noodle belt to compounding or the like to form a noodle belt, further rolling out the noodle belt a plural times to set the noodle belt thickness to a prescribed one, and thereafter cutting out the noodle belt with a cutting-out roll called a cutting blade to prepare noodle strings can be mentioned. After the noodle belt is prepared using an extruder, rolling out and cutting out may be carried out, or after a plurality of noodle belts are combined to prepare a noodle belt having a multilayer structure, rolling out and cutting out may be carried out.

### 4. Steaming step

If necessary, raw noodle strings obtained in the noodle making step are subjected to steaming in accordance with an ordinary method to gelatinize the noodle strings. Regarding the steaming conditions, preferred conditions vary depending on the type of noodles and the thickness of noodles, and therefore, preferred conditions are appropriately set according to the desired texture. As the steaming method, not only heating by boiling or with saturated water vapor but also heating with superheated water vapor can also be carried out, and a moisture supplying step, such as a step of showering or dipping, can also be combined. If necessary, a liquid seasoning or a loosening agent can also be applied to the steamed noodles by showering or dipping.

### 5. Drying step

The noodle strings are cut into one-meal portions, weighed, packed in a drying container called a retainer, and then dried. In the case of fried noodles, fry drying is carried out by dipping the noodle strings in frying oil. The temperature of the frying oil is preferably 140 to 160°C. Drying is carried out in such a manner that the moisture content after drying is 1.5 to 5 wt%.

In the case of non-fried noodles, drying is carried out by a known method, such as hot-air drying, high-temperature hot-air drying, superheated steam drying, or microwave drying. A drying method with hot air, such as hot-air drying or high-temperature hot-air drying, is a common method, and drying is preferably carried out under the conditions of a drying temperature of 60 to 150°C and a wind velocity of 1 to 70 m/s. The drying step may be carried out by combining a plurality of conditions, and drying is carried out in such a manner that the moisture content after drying is 14.5 wt% or less.

As described above, by producing noodles using kneading water in which salt and monosodium glutamate are dissolved in such a manner that salt and monosodium glutamate are in respective amounts of 0 to 10 g and 1 to 6 g, based on 1 kg of the main raw material powder, a method for producing instant noodles, in which noodle making properties and texture are improved even though the amount of salt used in the kneading water for noodles is reduced, can be provided.

### EXAMPLES

Hereinafter, the present embodiment will be described in more detail by way of example.

<Experiment 1: case where 10 g of salt based on 1 kg of main raw material powder is added to kneading water>

### (Example 1-1)

To 1 kg of a main raw material powder composed of 1 kg of all-purpose flour, was added kneading water in which 10 g of salt, 2 g of a kansui preparation (sodium carbonate 6 : potassium carbonate 4), and 1 g of monosodium glutamate were dissolved in water to dilute the resulting solution up to 350 ml, and they were mixed for 15 minutes with a normal pressure mixer, thereby preparing a noodle dough (dough).

The dough prepared was formed into a crude noodle belt with rolls, and the crude noodle belt was compounded, thereby preparing a noodle belt. The noodle belt prepared was rolled out with rolls in such a manner that the final noodle belt thickness became 0.75 mm, and the resulting noodle belt was cut with a cutting blade roll of #20 square blade, thereby preparing noodle strings.

Subsequently, the noodle strings were steamed for 2 minutes in a steaming chamber into which saturated steam was introduced at 240 kg/h, and thereby gelatinized.

The gelatinized noodle strings were dipped in a liquid seasoning in which 50 g of salt was dissolved in water and the resulting solution was diluted up to 1 L, and the resulting noodle strings were cut to about 30 cm, packed as one-meal portions of 98 g in a retainer for fry drying (container), and dried at 150°C for 2 minutes and 30 seconds, thereby obtaining fried noodle samples having a moisture content of 1.5 wt%.

### (Example 1-2)

Fried noodle samples were prepared in accordance with the method of Example 1-1, except that the amount of monosodium glutamate added to the kneading water was changed to 3 g.

### (Comparative Example 1-1)

Fried noodle samples were prepared in accordance with the method of Example 1-1, except that the amount of salt added to the kneading water was changed to 20 g, and monosodium glutamate was not added.

### (Comparative Example 1-2)

Fried noodle samples were prepared in accordance with the method of Example 1-1, except that monosodium glutamate was not added to the kneading water.

Regarding the noodle making properties for noodles in each experimental plot and the texture of noodles after cooking, evaluation was carried out using Comparative Example 1-1 as a control. An experimental plot in which noodle making properties for noodles were equal to those of Comparative Example 1-1 was ranked as 5; an experimental plot in which noodle making properties were slightly inferior to those of Comparative Example 1-1 but were good was ranked as 4; an experimental plot in which noodle making properties were inferior to those of Comparative Example 1-1, but continuous mechanical noodle making was possible was ranked as 3; an experimental plot in which noodle making properties were inferior to those of Comparative Example 1-1, and there was a possibility that continuous mechanical noodle making was impossible due to occurrence of breakage of a noodle belt was ranked as 2; and an experimental plot in which noodle making properties were markedly inferior to those of Comparative Example 1-1, and continuous mechanical noodle making was apparently impossible was ranked as 1.

In the cooking, a noodle sample and a powdered soup were placed in a cup-type foam paper cup container, then 380 ml of boiling water was introduced, a lid was put on the container, and the container was allowed to stand for 3 minutes, thereafter, the noodles were eaten, and the texture was evaluated. The evaluation was carried out by 5 skilled panelists, and regarding the texture, an experimental plot in which there were moderate smoothness and elasticity similarly to Comparative Example 1-1, and the texture was very good was ranked as 5; an experimental plot in which smoothness and elasticity were slightly strong or weak as compared with those of Comparative Example 1-1, but the texture was generally good was ranked as 4; an experimental plot in which smoothness and elasticity were strong or weak as compared with those of Comparative Example 1-1, but the texture was acceptable as a product was ranked as 3; an experimental plot in which smoothness and elasticity were inferior to those of Comparative Example 1-1, and the texture was not acceptable as a product was ranked as 2; and an experimental plot in which smoothness and elasticity were markedly inferior to those of Comparative Example 1-1, and the texture was not acceptable as a product was ranked as 1.

Noodle making properties and a sensory evaluation result of each experimental plot of Experiment 1 are described in Table 1 below.

**[Table 1]**

| Test Example | Salt (g/main raw material powder 1 kg) | Monosodium glutamate (g/main raw material powder 1 kg) | Noodle making properties | Texture | Comment |
|---|---|---|---|---|---|
| Comparative Example 1-1 | 20 | 0 | 5 | 5 | Control |
| Comparative Example 1-2 | 10 | 0 | 3 | 3 | Stretching of dough was poor as compared with that of Comparative Example 1-1 and was at the level where mechanical noodle making was barely possible. |
| | | | | | Texture was soft and raw-like but was barely acceptable as a product. |
| Example 1-1 | 10 | 1 | 4 | 5 | By adding monosodium glutamate, texture became tight and nearly equal to that of Comparative Example 1-1. |
| | | | | | Also, regarding noodle making properties, improvement was observed more than in Comparative Example 1-2. |
| Example 1-2 | 10 | 3 | 5 | 4 | Noodles were more tightened than in Example 1-1 and started to become hard, but they are generally good. |
| | | | | | The level of noodle making properties was also equal to that of Comparative Example 1-1. |

As shown in Experiment 1, addition of monosodium glutamate to kneading water in which the amount of salt added was reduced to 10 g, improved noodle making properties and texture. From the above results, it can be understood that when salt contained in kneading water is reduced, deterioration of noodle making properties and texture can be suppressed by adding monosodium glutamate.

### <Experiment 2: case where salt is not added to kneading water>

### (Example 2-1)

Fried noodle samples were prepared in accordance with the method of Example 1-1, except that salt was not added to the kneading water.

### (Example 2-2)

Fried noodle samples were prepared in accordance with the method of Example 2-1, except that the amount of monosodium glutamate added to the kneading water was changed to 2 g.

### (Example 2-3)

Fried noodle samples were prepared in accordance with the method of Example 2-1, except that the amount of monosodium glutamate added to the kneading water was changed to 3 g.

### (Example 2-4)

Fried noodle samples were prepared in accordance with the method of Example 2-1, except that the amount of monosodium glutamate added to the kneading water was changed to 6g.

### (Comparative Example 2-1)

Fried noodle samples were prepared in accordance with the method of Comparative Example 1-1, except that salt was not added to the kneading water.

Regarding Experiment 2, evaluation was carried out in the same manner as in Experiment 1. Noodle making properties and a sensory evaluation result of each experimental plot of Experiment 2 are described in Table 2 below.

**[Table 2]**

| Test Example | Salt (g/main raw material powder 1 kg) | Monosodium glutamate (g/main raw material powder 1 kg) | Noodle making properties | Texture | Comment |
|---|---|---|---|---|---|
| Comparative Example 1-1 | 20 | 0 | 5 | 5 | Control |
| Comparative Example 2-1 | 0 | 0 | 2 | 2 | Stretching of dough was insufficient, noodles were easily broken, and mechanical noodle making was impossible. |
| | | | | | Texture was also too soft, was non-elastic, and was not acceptable as a product. |
| Example 2-1 | 0 | 1 | 3 | 4 | By adding monosodium glutamate, texture became tight and good. |
| | | | | | Also, regarding noodle making properties, improvement up to the level where mechanical noodle making was possible was observed. |
| Example 2-2 | 0 | 2 | 4 | 5 | Texture was equal to that of Comparative Example 1-1. |
| | | | | | Noodle making properties were also good. |
| Example 2-3 | 0 | 3 | 4 | 4 | Noodles were more tightened than in Example 2-2 and started to become hard, but they were generally good. |
| | | | | | Noodle making properties were also slightly inferior to those of Comparative Example 1-1 but are good. |
| Example 2-4 | 0 | 6 | 5 | 3 | Noodles were more tightened than in Example 2-2 and became hard, but they were generally acceptable as a product. |
| | | | | | Noodle making properties were further improved and were equal to those of Comparative Example 1-1. |
| | | | | | Harsh taste of monosodium glutamate started to come out. |

As a result of Experiment 2, even though the amount of salt contained in the kneading water was 0 g, an effect of improving noodle making properties and texture due to the addition of monosodium glutamate to the kneading water was observed similarly to Experiment 1. As can be seen from the results of Experiment 1 and Experiment 2, when the amount of salt added to the kneading water was 0 to 10 g based on 1 kg of the main raw material powder, an effect of improving noodle making properties was observed by adding 1 g or more of monosodium glutamate to the kneading water. The effect of improving texture was higher than the effect of improving noodle making properties, and addition of too much monosodium glutamate adversely resulted in a hard and bad texture. It is thought that from the viewpoint of flavor of noodles and from the viewpoint of texture, addition of more than 6 g of monosodium glutamate based on 1 kg of the main raw material powder to the kneading water is undesirable. It is thought that the amount of the monosodium glutamate is more preferably in the range of 1 to 3 g.

### <Experiment 3: inspection with non-fried noodles>

### (Example 3-1)

To 1 kg of a main raw material powder composed of 850 g of wheat flour and 150 g of acetylated tapioca starch, was added kneading water in which 10 g of salt, 1 g of monosodium glutamate, 8 g of a kansui preparation (potassium carbonate:sodium carbonate = 6:4), 1 g of sodium phosphate, 1 g of polymerized phosphate, and 0.2 g of marigold pigment were dissolved in 400 g of water, and they were mixed for 15 minutes with a normal pressure mixer, thereby preparing a noodle dough (dough).

The dough prepared was formed into a crude noodle belt with rolls, and the crude noodle belt was compounded, thereby preparing a noodle belt. The noodle belt prepared was rolled out with rolls in such a manner that the final noodle belt thickness became 1.5 mm, and the resulting noodle belt was cut with a #16 round cutting blade roller, thereby preparing noodle strings.

Subsequently, the noodle strings were steamed for 2 minutes and 30 seconds in a steaming chamber into which saturated steam was introduced at 270 kg/h, and thereby gelatinized.

The gelatinized noodle strings were dipped in a liquid seasoning in which 45 g of salt, 5 g of gum arabic, and 3 g of monosodium glutamate were dissolved in water and the resulting solution was diluted up to 1 L, and the resulting noodle strings were cut to about 30 cm, packed as one-meal portions of 145 g in a retainer, and dried at 85°C for 50 minutes, thereby obtaining non-fried Chinese noodle samples.

### (Example 3-2)

Non-fried Chinese noodle samples were prepared in accordance with the method of Example 3-1, except that salt was not added to the kneading water, and the amount of monosodium glutamate was changed to 2 g.

### (Comparative Example 3-1)

Non-fried Chinese noodle samples were prepared in accordance with the method of Example 3-1, except that the amount of salt added to the kneading water was changed to 20 g, and monosodium glutamate was not added.

### (Comparative Example 3-2)

Non-fried Chinese noodle samples were prepared in accordance with the method of Example 3-1, except that monosodium glutamate was not added to the kneading water.

### (Comparative Example 3-3)

Non-fried Chinese noodle samples were prepared in accordance with the method of Example 3-2, except that monosodium glutamate was not added to the kneading water.

Regarding Experiment 3, evaluation was carried out in the same manner as in Experiment 1. In the cooking, however, a noodle sample and a powdered soup were placed in a bowl-shaped foamed polystyrene container, then 480 ml of boiling water was introduced, a lid was put on the container, and the container was allowed to stand for 5 minutes, thereafter, the noodles were eaten, and the texture was evaluated. Evaluation of noodle making properties and texture was carried out using Comparative Example 3-1 as a control. Noodle making properties and a sensory evaluation result of each experimental plot of Experiment 3 are described in Table 3 below.

**[Table 3]**

| Test Example | Salt (g/main raw material powder 1 kg) | Monosodium glutamate (g/main raw material powder 1 kg) | Noodle making properties | Texture | Comment |
|---|---|---|---|---|---|
| Comparative Example 3-1 | 20 | 0 | 5 | 5 | Control |
| Comparative Example 3-2 | 10 | 0 | 4 | 3 | Kansui preparation was contained in a larger amount than in fried noodles, so that noodle making properties were good. Texture was soft and lacked elasticity but was at an acceptable level as a product. |
| Example 3-1 | 10 | 1 | 5 | 5 | By adding monosodium glutamate, noodle making properties were improved, and texture also became tight and nearly equal to that of Comparative Example 3-1. |
| Comparative Example 3-3 | 0 | 0 | 3 | 2 | Kansui preparation was contained in a larger amount than in fried noodles even though salt was not added, so that noodle making properties were generally acceptable. Texture was too soft and was not acceptable as a product. |
| Example 3-3 | 0 | 2 | 4 | 5 | Noodle making properties were good even though salt was not added. Texture became tight and was nearly equal to that of Comparative Example 3-1. |

Because non-fried noodles more scarcely suffer discoloration caused by kansui than fried noodles, it is possible to add kansui in a large amount, and due to kansui, noodle making properties are better than those for fried noodles, and also, in the non-fried noodles, by adding monosodium glutamate, improvement in noodle making properties and texture were observed similarly to the fried noodles even though the amount of salt was set to 10 g or less based on 1 kg of the main raw material powder.

## Claims

1. A method for producing instant noodles, comprising
a step of kneading a main raw material powder with kneading water containing 0 to 10 g of salt and 1 to 6 g of monosodium glutamate based on 1 kg of the main raw material powder to prepare a dough,
a step of preparing noodle strings from the dough prepared, and
a step of drying the noodle strings.

2. The method for producing instant noodles according to claim 1, wherein an amount of the monosodium glutamate added is 1 to 3 g based on 1 kg of the main raw material powder.
